# EUROPEAN PATENT SPECIFICATION

(11) **EP 1 728 829 B1**
(45) Date of publication and mention of the grant of the patent: **07.11.2007**
(21) Application number: 06252834.4
(22) Date of filing: 01.06.2006
(51) Int. Cl.: C08L 83/04, C08K 3/10

(54) **Addition type silicone adhesive composition**
Additionsvernetzende Silikon-Klebstoffmasse
Composition adhésive de silicone réticulable par addition

(30) Priority: 03.06.2005 JP 2005164055
(43) Date of publication of application: 06.12.2006
(73) Proprietor: Shin-Etsu Chemical Co., Ltd., Tokyo (JP)
(72) Inventor: Aketa, Takashi, Silicone-Electronics Mat.Rs.Ctr., Annaka-shi Gunma-ken (JP); Harada, Yoshifumi, Silicone-Electronics Mat.R.Ctr., Annaka-shi Gunma-ken (JP); Hara, Hiroyasu, Silicone-Electronics Mat.Rs.Ctr., Annaka-shi Gunma-ken (JP)
(74) Representative: Stoner, Gerard Patrick

(56) References cited:
- GB-A- 2 066 833
- US-B1- 6 201 092

## Description

This invention relates to an addition type silicone adhesive composition which establishes a satisfactory bond strength to an adherend within a short time of heating, and imparts a cured product which is hardly discolored even after holding at high temperature for a long period of time.

### BACKGROUND

It is well known in the art to add organosilicon compounds having an epoxy group to silicone compositions for enhancing their adhesion. The resulting compositions become fully adherent, but must generally be heated for at least 30 minutes before a bond strength is established. A common approach for accelerating the development of adhesion is to add a number of adhesion assistants and organotitanium compounds. This approach, however, gives rise to the problem that the cured silicone turns yellow when it is held at high temperature for a long period of time.

Known references include JP-A 6-145525 corresponding to EP 596,534 A, JP-A 8-209068 corresponding to USP 6,387,451, and JP-A 9-087585 corresponding to USP 5,789,084.

An object of the present invention is to provide an addition type silicone adhesive composition which can develop adhesion sooner than in the prior art and imparts a cured product having little discoloration upon long-term exposure to high temperature.

The inventors have found that by combining (A) an organopolysiloxane having at least two silicon-bonded alkenyl groups per molecule, (B) an organohydrogenpolysiloxane having at least two silicon-bonded hydrogen atoms per molecule, (C) a hydrosilylation catalyst, (D) a (meth)acryloxyalkyl-modified organopolysiloxane of linear or cyclic organopolysiloxane structure having a viscosity of 5 to 10,000 mPa-s at 25°C, and (E) a zirconium compound, they can obtain addition type adhesive compositions which develop adhesion relatively quickly compared with prior art while giving a cured product having little discoloration upon long-term exposure to high temperature.

In one aspect, we provide an addition type silicone adhesive composition comprising in admixture,
(A) 100 parts by weight of an organopolysiloxane having at least two silicon-bonded alkenyl groups per molecule,
(B) an organohydrogenpolysiloxane having at least two silicon-bonded hydrogen atoms per molecule in an amount to give 0.1 to 5.0 moles of silicon-bonded hydrogen atoms per mole of alkenyl groups in the organopolysiloxane (A),
(C) a catalytic amount of a hydrosilylation catalyst,
(D) 0.0001 to 10 parts by weight of a (meth)acryloxyalkyl-modified organopolysiloxane possessing a linear or cyclic organopolysiloxane structure and having a viscosity of 5 to 10,000 mPa-s at 25°C, and
(E) a zirconium compound, preferably in an amount of 0.0001 to 5 parts by weight.

Optionally, the composition further comprises (F) a tackifier.

### BENEFITS OF THE INVENTION

The addition type silicone adhesive composition of the invention establishes a satisfactory bond strength merely by heating for a short period of time, making the related process more efficient. The cured product obtained from the composition undergoes little discoloration even after a long-term heat resistance test. The composition thus finds a wider variety of applications covering from general industrial articles to household articles.

### FURTHER EXPLANATIONS; OPTIONS AND PREFERENCES

The addition type silicone adhesive composition of the invention comprises (A) an organopolysiloxane having at least two silicon-bonded alkenyl groups per molecule, (B) an organohydrogenpolysiloxane having at least two silicon-bonded hydrogen atoms per molecule, (C) a hydrosilylation catalyst, (D) a (meth)acryloxyalkyl-modified organopolysiloxane of linear or cyclic organopolysiloxane structure having a viscosity of 5 to 10,000 mPa-s at 25°C, (E) a zirconium compound, and optionally, (F) a tackifier, which are described in detail.

### (A) Alkenyl-containing organopolysiloxane

The organopolysiloxane (A), which is a base polymer of the inventive composition, should have at least two, preferably 2 to about 20, more preferably 2 to about 10 silicon-bonded alkenyl groups per molecule. Exemplary of the alkenyl groups are those having 2 to 8 carbon atoms such as vinyl, allyl, butenyl, pentenyl, hexenyl and heptenyl groups, with the vinyl being most preferred. The alkenyl groups may be bonded to silicon atoms at ends and/or side chains of the molecular chain.

In addition to the silicon-bonded alkenyl groups, the organopolysiloxane (A) has organic groups bonded to silicon atoms, for example, alkyl groups such as methyl, ethyl, propyl, butyl, pentyl, hexyl and heptyl; aryl groups such as phenyl, tolyl, xylyl and naphthyl; aralkyl groups such as benzyl and phenethyl; and haloalkyl groups such as chloromethyl, 3-chloropropyl and 3,3,3-trifluoropropyl; with methyl and phenyl being most preferred.

The molecular structure of the organopolysiloxane (A) may be a straight, partially branched straight, cyclic or branched chain, or three-dimensional network, for example. Preferred is a straight chain diorganopolysiloxane whose backbone consists essentially of recurring diorganosiloxane units and whose molecular chain is blocked with a triorganosiloxy group at either end.

The organopolysiloxane (A) should preferably have a viscosity of 100 to 500,000 mPa-s at 25°C, more preferably 300 to 100,000 mPa-s at 25°C because the resulting silicone rubber has excellent physical properties and the resulting composition becomes easy to handle. It is noted that the viscosity is measured by a rotational viscometer at 25°C.

Examples of the organopolysiloxane (A) include trimethylsiloxy end-capped dimethylsiloxane-methylvinylsiloxane copolymers, trimethylsiloxy end-capped methylvinylpolysiloxane, trimethylsiloxy end-capped dimethylsiloxane-methylvinylsiloxane-methylphenylsiloxane copolymers, dimethylvinylsiloxy end-capped dimethylpolysiloxane, dimethylvinylsiloxy end-capped methylvinylpolysiloxane, dimethylvinylsiloxy end-capped dimethylsiloxane-methylvinylsiloxane copolymers, dimethylvinylsiloxy end-capped dimethylsiloxane-methylvinylsiloxane-methylphenylsiloxane copolymers, trivinylsiloxy end-capped dimethylpolysiloxane, organosiloxane copolymers consisting of siloxane units of the formula: R¹₃SiO_{1/2}, siloxane units of the formula: R¹₂R²SiO_{1/2}, siloxane units of the formula: R¹₂SiO and siloxane units of the formula: SiO₂, organosiloxane copolymers consisting of siloxane units of the formula: R¹₃SiO_{1/2}, siloxane units of the formula: R¹₂R²SiO_{1/2}, and siloxane units of the formula: SiO₂, organosiloxane copolymers consisting of siloxane units of the formula: R¹₂R²SiO_{1/2}, siloxane units of the formula: R¹₂SiO and siloxane units of the formula: SiO₂, organosiloxane copolymers consisting of siloxane units of the formula: R¹R²SiO and siloxane units of the formula: R¹SiO_{3/2} or R²SiO_{3/2}, and mixtures of two or more of the foregoing.

Throughout the specification, the term "end-capped" used in connection with siloxanes means that a siloxane is capped with a specified group at each end of its molecular chain.

In the above formulae, R¹ is a substituted or unsubstituted monovalent hydrocarbon group other than alkenyl groups, for example, alkyl groups such as methyl, ethyl, propyl, butyl, pentyl, hexyl, and heptyl; aryl groups such as phenyl, tolyl, xylyl and naphthyl; aralkyl groups such as benzyl and phenethyl. Preferred substituted groups include halogenated groups, e.g. halogenated alkyl groups such as chloromethyl, 3-chloropropyl and 3,3,3-trifluoropropyl. R² is an alkenyl group such as vinyl, allyl, butenyl, pentenyl, hexenyl or heptenyl.

### (B) Organohydrogenpolysiloxane

The organohydrogenpolysiloxane (B) should contain at least two (usually 2 to 300), preferably at least three (for example, 3 to 150) silicon atom-bonded hydrogen atoms (i.e., SiH groups) in a molecule. It may have any of straight, cyclic, branched and three-dimensional network (resinous) structures. Typically, the organohydrogenpolysiloxane used herein has the average compositional formula (1):

HₐR³_{b}SiO_{(4-a-b)/2} (1)

wherein R³ is independently an aliphatic unsaturation-free, substituted or unsubstituted monovalent hydrocarbon group, and the letters a and b are numbers in the range: 0 < a < 2, 0.8 ≤ b s 2, and 0.8 < a+b s 3, and preferably 0.05 ≤ a ≤ 1, 0.9 ≤ b ≤ 2, and 1.0 s a+b s 2.7. The number of silicon atoms in a molecule is preferably 2 to 300, more preferably 3 to 200.

Options for suitable aliphatic unsaturation-free, substituted or unsubstituted monovalent hydrocarbon groups represented by R³ are as exemplified above for R¹, typically those of 1 to 10 carbon atoms, more typically 1 to 7 carbon atoms. Alkyl groups of 1 to 3 carbon atoms are suitable. Selections from methyl, phenyl, and 3,3,3-trifluoropropyl are preferred.

Examples of the organohydrogenpolysiloxane (B) include siloxane oligomers such as 1,1,3,3-tetramethyldisiloxane, 1,3,5,7-tetramethylcyclosiloxane, 1 ,3, 5, 7, 8-pentamethylpentacyclosiloxane, methylhydrogencyclopolysiloxane, methylhydrogen-dimethylsiloxane cyclic copolymer, tris(dimethylhydrogensiloxy)methylsilane, and tris(dimethylhydrogensiloxy)phenylsilane; trimethylsiloxy end-capped methylhydrogenpolysiloxane, trimethylsiloxy end-capped dimethylsiloxane-methylhydrogensiloxane copolymers, silanol end-capped methylhydrogenpolysiloxane, silanol end-capped dimethylsiloxane-methylhydrogensiloxane copolymers, dimethylhydrogensiloxy end-capped dimethylpolysiloxane, dimethylhydrogensiloxy end-capped methylhydrogenpolysiloxane, dimethylhydrogensiloxy end-capped dimethylsiloxane-methylhydrogensiloxane copolymers, and silicone resins comprising R³₂ (H)SiO_{1/2} units and SiO_{4/2} units and optionally R³₃SiO_{1/2} units, R³₂SiO_{2/2} units, R³(H)SiO_{2/2} units, (H)SiO_{3/2} units or R³SiO_{3/2} units wherein R³ is as defined above. In addition, compounds in which a part or all of methyl groups of the above-exemplified compounds are substituted by an alkyl group such as ethyl group, propyl group and the like or phenyl group are also mentioned. Also included are those represented by the following formulae. 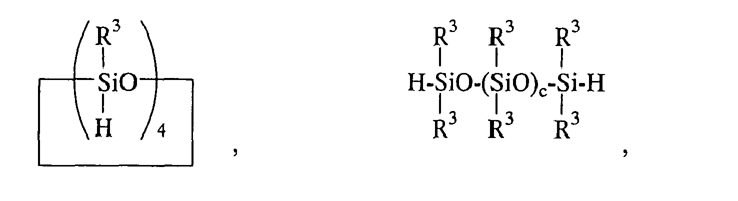 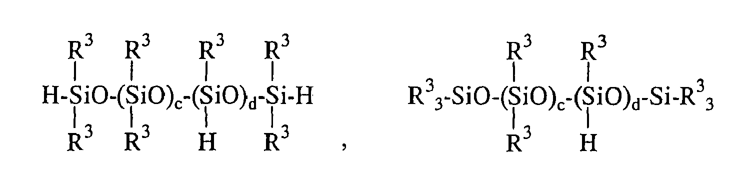 Herein R³ is as defined above, c and d each are an integer of 0, 1 or more.

The organohydrogenpolysiloxane used herein may be prepared by any well-known methods. For example, it can be prepared by subjecting at least one chlorosilane selected from the general formulae: R³SiHCl₂ and R³₂SiHCl wherein R³ is as defined above to (co)hydrolysis, or by subjecting a mixture of said chlorosilane and at least one chlorosilane selected from the general formulae: R³₃SiCl and R³₂SiCl₂ wherein R³ is as defined above to cohydrolysis. The polysiloxane resulting from cohydrolysis may be equilibrated before it is used as the organohydrogenpolysiloxane.

Component (B) is compounded in such amounts that 0.1 to 5 moles, preferably 0.1 to 3 moles, more preferably 0.5 to 2.5 moles, most preferably 1.0 to 2.0 moles of silicon-bonded hydrogen atoms (i.e., SiH groups) in component (B) are available per mole of alkenyl groups in component (A). With too less an amount of SiH groups, the composition becomes undercured, failing to yield cured rubber having strength. Too much an amount of SiH groups makes the cured rubber brittle and adversely affects rubber physical properties.

### (C) Hydrosilylation catalyst

The hydrosilylation catalyst (C) is effective for promoting the addition reaction between alkenyl groups in component (A) and silicon-bonded hydrogen atoms (i.e., SiH groups) in component (B). Well-known catalysts used in hydrosilylation reaction are useful. Exemplary catalysts are platinum group metal base catalysts including elemental platinum group metals such as platinum (inclusive of platinum black), rhodium and palladium; platinum chloride, chloroplatinic acid and chloroplatinic acid salts such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂ and Na₂HPtCl₄·nH₂O wherein n is an integer of 0 to 6, preferably 0 or 6; alcohol-modified chloroplatinic acid (see USP 3,220,972); complexes of chloroplatinic acid with olefins (see USP 3,159,601, 3,159,662 and 3,775,452); platinum group metals such as platinum black and palladium on carriers such as alumina, silica and carbon; rhodium-olefin complexes; chlorotris(triphenylphosphine)rhodium (known as Wilkinson catalyst); and complexes of platinum chloride, chloroplatinic acid or chloroplatinic acid salts with vinyl-containing siloxanes, especially vinyl-containing cyclic siloxanes.

Component (C) is used in catalytic amounts, preferably such as to give 0.1 to 500 ppm, more preferably 0.5 to 200 ppm of platinum group metal based on the weight of components (A) and (B) combined.

### (D) (Meth)acryloxyalkyl-modified organopolysiloxane

The (meth)acryloxyalkyl-modified organopolysiloxane (D) is a key component on which the invention relies in that the composition develops good adhesion due to the high affinity of (meth)acrylic groups to various substrates. As conventionally, "(meth)acryloxy" is inclusive of acryloxy and/or methacryloxy. The (meth)acryloxyalkyl-modified organopolysiloxane has in its molecule a siloxane (≡Si-O-Si≡) chain structure which is linear or cyclic. This is because (meth)acryloxyalkyl-modified organopolysiloxane diffuses through the composition and travels toward the substrate interface during heat curing. Siloxanes of linear or cyclic structure are likely to diffuse through the composition, exerting their effect to a full extent. By contraries, if the siloxane has a branched structure, the branched structure prevents the molecules from diffusing, failing to achieve the desired effect. In the case of linear organopolysiloxane, its molecular chain may be terminated with a silanol group (silicon-bonded hydroxyl group) or end-capped with a triorganoxy group such as trimethylsiloxy group.

It is desired that the (meth)acryloxyalkyl-modified organopolysiloxane (D) be free of silicon-bonded hydrogen atoms (SiH groups) in its molecule. If the (meth)acryloxyalkyl-modified organopolysiloxane used has SiH groups, addition reaction can occur between its molecules so that the (meth)acryloxyalkyl-modified organopolysiloxane eventually separates from the organopolysiloxanes of components (A) and (B). As a result, the adhesion-imparting effect becomes inconsistent and the adhesion becomes poor.

The preferred (meth)acryloxyalkyl-modified organopolysiloxane has the average compositional formula (2).

R⁴ₑR⁵_{f}SiO_{(4-e-f)/2} (2)

Herein R⁴ is hydrogen, hydroxyl, or alkyl or aryl group of 1 to 10 carbon atoms, R⁵ is (meth)acryloxyalkyl group represented by the formula: 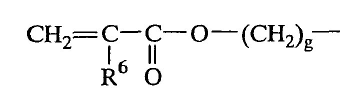 wherein R⁶ is hydrogen or methyl, and g is an integer of 2 to 6, preferably 2, 3 or 4; e is a positive number of 0.8 to 2.4, preferably 1 to 1.8, f is a positive number of 0.1 to 1.2, preferably 0.2 to 1, more preferably 0.4 to 1, and e+f is 2 to 2.5, preferably 2 to 2.2.

Suitable alkyl and aryl groups represented by R⁴ are as exemplified above for R¹, preferably methyl, ethyl, propyl and phenyl, with methyl being most preferred.

As the affinity increases, the (meth)acryloxyalkyl-modified organopolysiloxane becomes more likely to develop adhesion. It is thus preferred that (meth)acrylic groups be contained in this organopolysiloxane in a higher concentration, and specifically, that this organopolysiloxane have a (meth)acrylic equivalent of 140 to 500, especially 170 to 340. A (meth)acrylic equivalent of more than 500 may be sometimes detrimental to adhesion whereas some compounds with a (meth)acrylic equivalent of less than 140 may be unstable or difficult to synthesize.

The (meth)acryloxyalkyl-modified organopolysiloxane should have a viscosity at 25°C of 5 to 10,000 mPa-s, preferably 5 to 5,000 mPa-s, more preferably 10 to 1,000 mPa-s. The (meth)acryloxyalkyl-modified organopolysiloxane with a viscosity of less than 5 mPa-s has an increased solubility in the organopolysiloxanes of components (A) and (B) and cannot be retained at the interface with the adherend, resulting in poor adhesion. The (meth)acryloxyalkyl-modified organopolysiloxane with a viscosity of more than 10,000 mPa-s has too high a molecular weight, leading to a reduced rate of diffusion through the composition. The viscosity measurement is as previously described for component (A).

For the linear or cyclic organopolysiloxane as component (D), the number of silicon atoms per molecule (or degree of polymerization) is desirably from 2 to about 40, more desirably 3 to about 30, most desirably 4 to about 20, from the standpoints of the diffusion through the composition, the affinity to substrates, and molecule's stability. For the same reason, the number of (meth)acryloxyalkyl groups per molecule is desirably at least 2, more desirably 3 to 20, most desirably 4 to 10.

An appropriate amount of the (meth)acryloxyalkyl-modified organopolysiloxane (D) compounded is 0.0001 to 10 parts, preferably 0.0005 to 3 parts, more preferably 0.001 to 2 parts by weight per 100 parts by weight of the organopolysiloxane (A). Less than 0.0001 pbw of component (D) fails to achieve the satisfactory adhesion-improving effect whereas more than 10 pbw of component (D) can adversely affect the balance of three-dimensional crosslinking reaction due to addition reaction between components (A) and (B), failing to achieve a sufficient rubber hardness.

### (E) Zirconium compound

In the invention, a zirconium compound is added for promoting and improving the good adhesion-imparting effect of component (D) by using the zirconium compound in combination with component (D). Although organotitanium compounds are generally used for such purposes, cured compositions loaded therewith turn yellow during long-term holding at high temperature. The inventor has found that the possibility of yellowing can be minimized by using zirconium compounds instead of the organotitanium compounds. The zirconium compounds which can be used herein are well-known ones and not particularly limited. To take more advantage in forming a bond, those zirconium compounds which are liquid at room temperature or have a lower melting point than the heating temperature contemplated are preferred. The zirconium compound (E) would act as a hydrolytic catalyst for alkoxy groups in case that a tackifier (F) other than component (D) described later is incorporated and the tackifier (F) is a compound containing an alkoxy group.

Illustrative, non-limiting examples of the zirconium compound include zirconium n-propylate, zirconium n-butyrate, zirconium acetate, zirconium monostearate, zirconium tetraacetylacetonate, zirconium monoacetylacetonate, zirconium bisacetylacetonate, zirconium monoethylacetoacetate, and zirconium acetylacetonate bisester acetoacetate (i.e. organic zirconium compounds).

An appropriate amount of the zirconium compound (E) added is 0.0001 to 5 parts, preferably 0.001 to 4 parts, more preferably 0.01 to 2 parts, most preferably 0.1 to 1 part by weight per 100 parts by weight of the organopolysiloxane (A). Less than 0.0001 pbw of the zirconium compound may fail to achieve the desired adhesion-enhancing effect whereas too much amounts may lead to undercure.

### (F) Tackifier

In the addition reaction curing type silicone adhesive composition according to the present invention, (F) a tackifier may optionally be incorporated in addition to the above-described component (D).

Any compounds used as tackifiers in the conventional addition reaction curing type silicone rubber compositions are used although the compounds included in component (D) are excluded. The preferred tackifiers are organic silicon compounds having at least two functional groups selected from the group consisting of alkoxysilyl groups (such as trialkoxysilyl groups, organodialkoxysilyl groups and diorganoalkoxysilyl groups), silanol group, carbinol group, epoxy group, hydrosilyl group (SiH group), alkenyl groups (such as vinyl group and allyl group), amino group, carbonyl group (C=O structure), and ester group ( 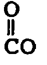 structure). More preferably, exemplified are organic silicon compounds including silanes and cyclic or linear siloxanes having 2 to 30 silicon atoms, preferably 4 to 20 silicon atoms which contains the alkoxysilyl group and/or SiH group as well as one or more of the other functional groups.

They are used singly or in combination of two or more. Component (F) is used in an amount of up to 10 parts by weight (i.e., 0 to 10 parts by weight), preferably 0.5 to 5 parts by weight per 100 parts by weight of component (A). In case of using a tackifier (F) having hydrosilyl group (SiH group), the tackifier (F) is used in such amounts that 0.1 to 5 moles, preferably 0.1 to 3 moles, more preferably 0.2 to 2.5 moles of the total of silicon-bonded hydrogen atoms (i.e., SiH groups) in component (B) and component (F) are available per mole of alkenyl groups in component (A).

Examples of the organic silicon compounds used as component (F) include various alkoxysilanes such as vinyltrimethoxysilane, vinyltriethoxysilane, allyltrimethoxysilane, allyltriethoxysilane,
γ-glycidoxypropyltrimethoxysilane,
γ-glycidoxypropylmethyldimethoxysilane,
γ-glycidoxypropylmethyldiethoxysilane,
N-β(aminoethyl)-γ-aminopropyltrimethoxysilane,
N-β(aminoethyl)-γ-aminopropylmethyldimethoxysilane,
γ-aminopropyltrimethoxysilane,
γ-aminopropylmethyldimethoxysilane, and
γ-aminopropylmethyldiethoxysilane, partially hydrolysate condensates, and various siloxane compounds having SiH group and one or more of the other functional groups such as epoxy group or alkoxysilyl group shown below. In the following formulae, Me shows methyl group.

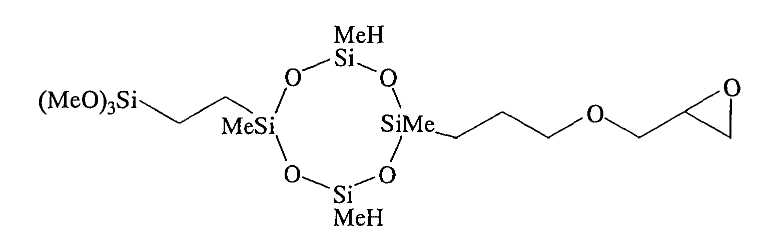

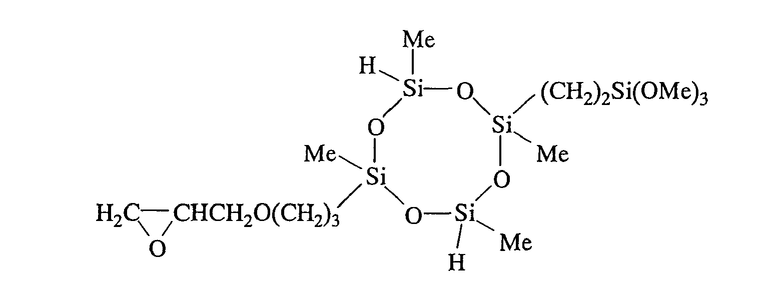

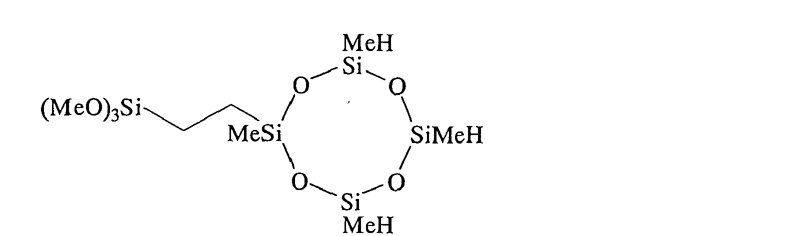

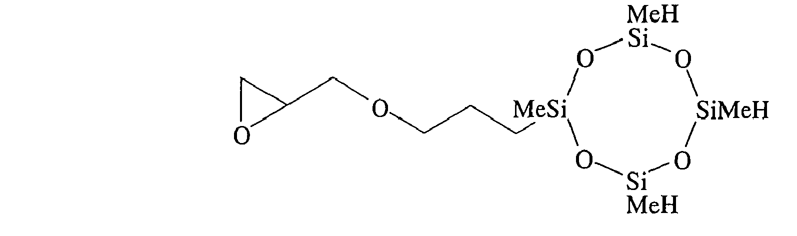

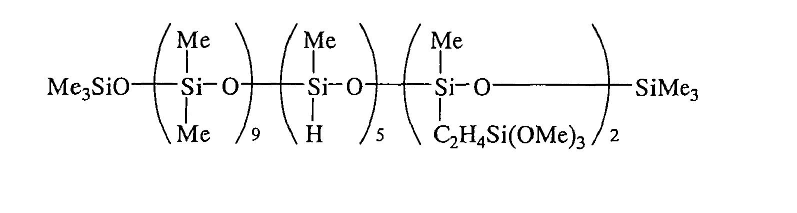

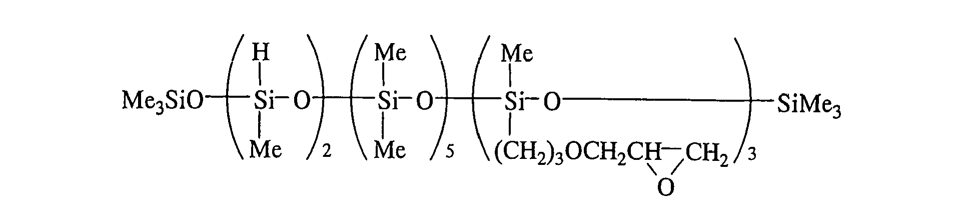

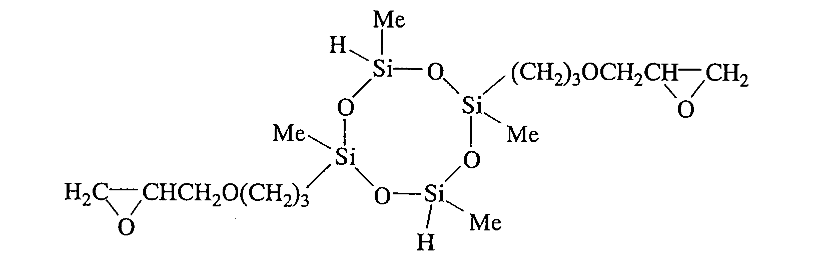

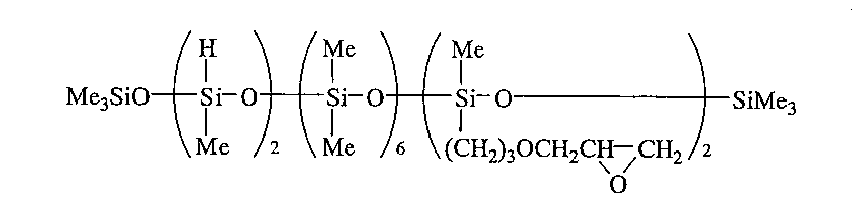

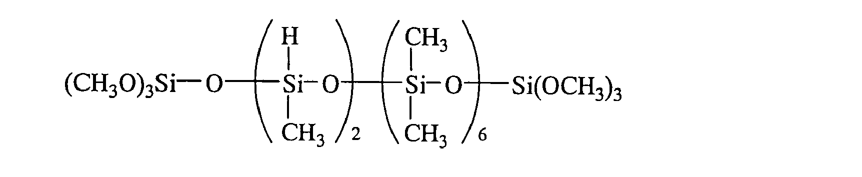

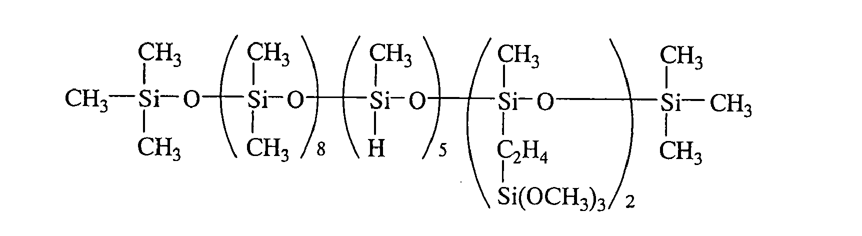

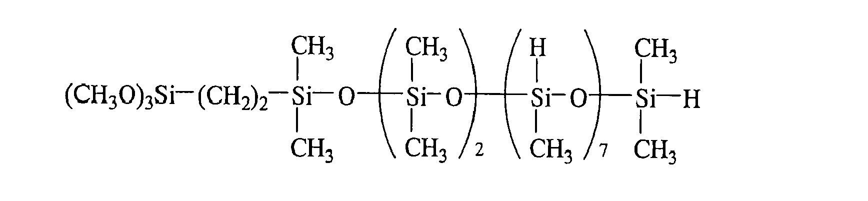

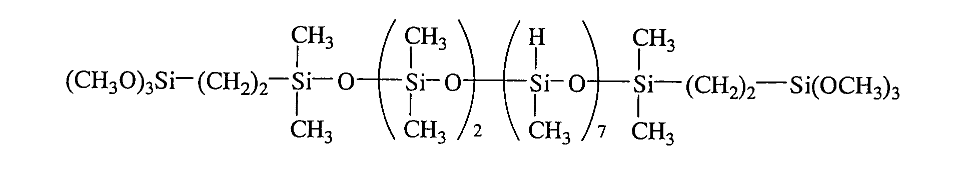

It will be understood that compounds (A), (B), (D), (F) are in general mutually distinct.

It is recommended that the inventive composition further include reinforcing finely divided silica in addition to components (A) to (F). The finely divided silica serves to reinforce the mechanical strength of the cured composition and may be selected from well-known ones commonly used in silicone rubbers. Examples include fumed silica, precipitated silica, fired silica, ground quartz, and diatomaceous earth, which may be used alone or in admixture of two or more. The finely divided silica generally has a specific surface area of at least 50 m²/g, preferably about 50 to about 500 m²/g, as measured by the BET method. The finely divided silica may be used without treatment or after treatment with organosilicon compounds such as methylchlorosilanes, dimethylpolysiloxanes and hexamethyldisilazanes for imparting better flow to the composition. The finely divided silica is used in an amount of usually up to 50 parts by weight (i.e., 0 to 50 parts by weight), preferably 1 to 40 parts by weight per 100 parts by weight of component (A).

If necessary, the inventive composition may have further added thereto reinforcing inorganic fillers such as fumed titanium dioxide; reinforcing silicone resins; and non-reinforcing inorganic fillers such as calcium silicate, titanium dioxide, ferric oxide and carbon black. The amount of these inorganic fillers added is 0 to 200 parts by weight per 100 parts by weight of the total of the components excluding the inorganic fillers.

The silicone adhesive composition may be prepared by any standard method, as a one-part composition or a two-part composition in which the two parts are mixed immediately before use. The silicone adhesive composition is typically curable by heating, at from room temperature (23±2°C) to 200°C, especially 60 to 150°C, for a relatively short time of 1 to 180 minutes, especially 3 to 60 minutes. We find that satisfactory bond strength is developed by such brief heating.

Since silicone adhesive compositions disclosed herein can establish a satisfactory bond strength merely by heating for a short period of time and undergo little discoloration even after a heat resistance test, they find a wider variety of applications covering from general industrial articles to household articles.

Methods of preparation of the compositions and of their use in making products comprising the cured compositions, especially in adhered contexts, are further aspects of the invention.

### EXAMPLE

Examples of the invention are given below by way of illustration and not by way of limitation. It is noted that the viscosity is measured by a rotational viscometer at 25°C. In an adhesion test, the adhesive composition was applied to a thickness of 2 mm.

### Examples 1-11 and Comparative Examples 1-9

The raw materials used in these examples are given below.
(A) Alkenyl-containing organopolysiloxane:
   Vinyl-containing linear organopolysiloxane having the following formula:

      Vi(Me)₂Si-(OSiMe₂)ₘ-OSi(Me)₂Vi
   wherein Me is methyl, Vi is vinyl, and m is such a number that the siloxane has a viscosity of 10,000 mPa-s at 25°C.
(B) Organohydrogenpolysiloxane:
   (B-1) Organohydrogenpolysiloxane having the following formula: 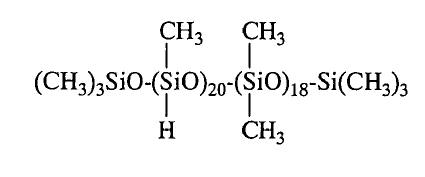
   (B-2) Organohydrogenpolysiloxane having the following formula: 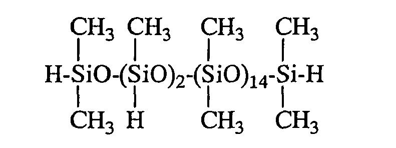
(C) Hydrosilylation catalyst:
   platinum-divinyltetramethyldisiloxane complex in toluene, platinum content 0.5 wt%
(D) (Meth)acryloxyalkyl-modified organopolysiloxane:
   (D-1) Acryloxyalkyl-modified organopolysiloxane of the formula below having a viscosity of 80 mPa-s at 25°C and an acrylic equivalent of 172 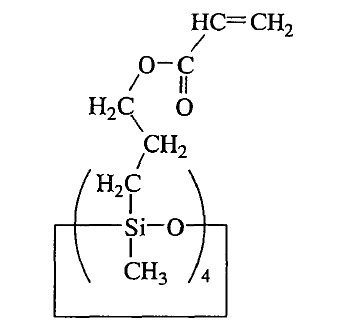
   (D-2) Acryloxyalkyl-modified organopolysiloxane of the formula below having a viscosity of 150 mPa-s at 25°C and an acrylic equivalent of 325 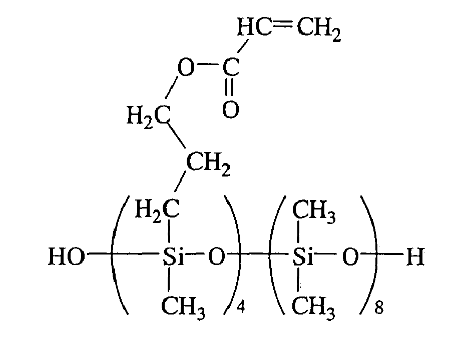
   (D-3) Acryloxyalkyl-modified organopolysiloxane of the formula below having a viscosity of 330 mPa-s at 25°C and an acrylic equivalent of 473 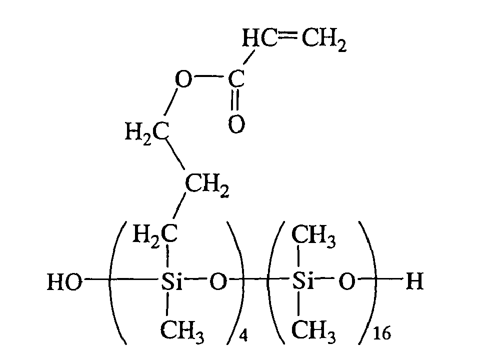
   (D-4) Acryloxyalkyl-modified organopolysiloxane of the formula below having a viscosity of 120 mPa-s at 25°C and an acrylic equivalent of 287 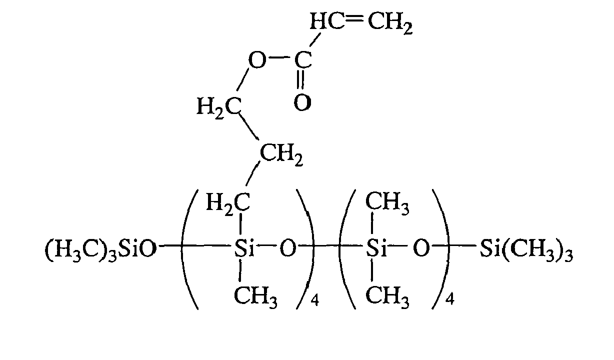
   (D-5) Methacryloxyalkyl-modified organopolysiloxane of the formula below having a viscosity of 150 mPa-s at 25°C and an acrylic equivalent of 339 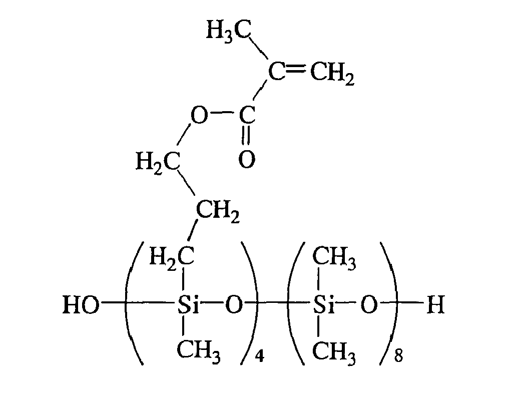
(E) Zirconium compound:
   (E-1) Zirconium n-propylate Zr(C₃H₇)₄
   (E-2) Zirconium n-butyrate Zr(OC₄H₉)₄
   (E-3) Zirconium monosteate Zr(OC₄H₉)₃(OCOC₁₇H₃₅)
   Note that all (E-1) to (E-3) are liquid at 25°C.
(F) Tackifier:
   Epoxy-containing organosilicon compound of the following formula: 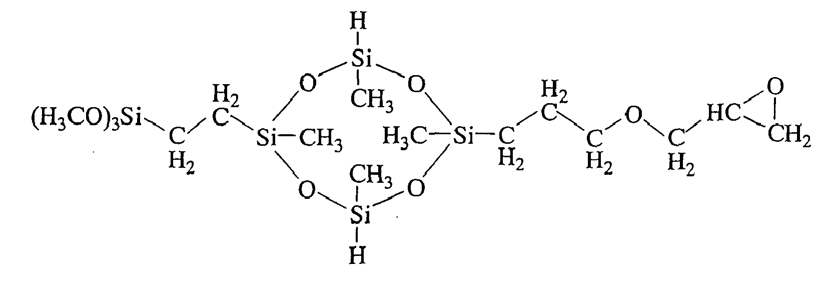
(G) Filler:
   Fumed silica (BET surface area = 210 m²/g) by Shin-Etsu Chemical Co., Ltd.
(H) Reinforcing resin:
   Reinforcing silicone resin by Shin-Etsu Chemical Co., Ltd.
(I) Cure regulator:
   1,3,5,7-tetramethyl-1,3,5,7-tetravinylcyclotetrasiloxane
   Besides, the following compounds were used in Comparative Examples.
(J) Organotitanium compound:
   (J-1) Tetraoctyltitanate Ti(OC₈H₁₇)₄
   (J-2) Diisoproxytitanium bis(ethyl acetoacetate)

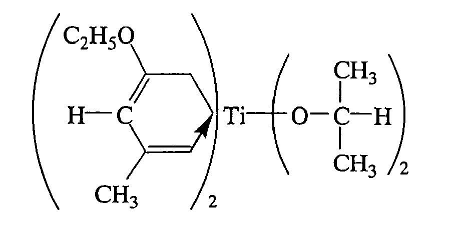

### Test procedure

Silicone compositions were prepared by premixing components (A), (C), (G) and (H), then adding components (I), (B), (D), (F), and (E) or (J) to the premix in the described order, thoroughly agitating, and deaerating to finish as silicone adhesive.

In an adhesion test, glass plates and hot dip aluminized SUS steel plates (stainless steel plates whose surface is aluminized by dipping in a molten aluminum bath) were used as the adherend. A pair of adherends, which were glass/glass and steel/steel combinations, were bonded together with the adhesive compositions over a bond area of 25 mm x 10 mm and at an adhesive thickness of 2 mm. The assemblies were cured at 120°C for 10 minutes, after which they were held at room temperature for 30 minutes. Using a tensile tester AG-IS (Shimadzu Mfg. Co., Ltd.), the shear bond strength of the assembly was measured by pulling at a rate of 50 mm/min. In all Examples and Comparative Examples except Comparative Example 1, the cohesive failure was 100%. In Comparative Example 1, in which the shear bond strength was weak and the cohesive failure of the adhesive was less than 100%, the cohesive failure (CF; %) is reported for both the glass and steel substrates.

In a heat resistance test, the cured silicone was held in a dryer at 180°C for 100 hours before it was examined for any color change.

**Table 1**

| Formulation (pbw) | Comparative Example | | | | | | | | |
|---|---|---|---|---|---|---|---|---|---|
| | 1 | 2 | 3 | 4 | 5 | 6 | 7 | 8 | 9 |
| A | 100 | 100 | 100 | 100 | 100 | 100 | 100 | 100 | 100 |
| B-1 | 3 | 3 | 3 | 3 | 3 | 3 | 3 | 3 | 3 |
| B-2 | 3 | 3 | 3 | 3 | 3 | 3 | 3 | 3 | 3 |
| C | 0.15 | 0.15 | 0.15 | 0.15 | 0.15 | 0.15 | 0.15 | 0.15 | 0.15 |
| D-1 | | | | | 1 | | | | |
| D-2 | | | | | | 1 | | | |
| D-3 | | | | | | | 1 | | |
| D-4 | | | | | | | | 1 | |
| D-5 | | | | | | | | | 1 |
| E-1 | | | | | | | | | |
| E-2 | | | | | | | | | |
| E-3 | | | | | | | | | |
| F | 3 | 3 | 3 | 3 | 3 | 3 | 3 | 3 | 3 |
| G | 15 | 15 | 15 | 15 | 15 | 15 | 15 | 15 | 15 |
| H | 10 | 10 | 10 | 10 | 10 | 10 | 10 | 10 | 10 |
| I | 0.1 | 0.1 | 0.1 | 0.1 | 0.1 | 0.1 | 0.1 | 0.1 | 0.1 |
| J-1 | | 0.5 | 0.3 | | 0.5 | 0.5 | 0.5 | 0.5 | 0.5 |
| J-2 | | | | 0.5 | | | | | |

| Test results | | | | | | | | | |
|---|---|---|---|---|---|---|---|---|---|
| Shear bond strength to glass (MPa) | 1.5 (CF;80%) | 2.5 | 2.2 | 2.3 | 2.0 | 2.3 | 2.4 | 2.0 | 1.9 |
| Shear bond strength to steel (MPa) | 1.0 (CF;90%) | 2.5 | 2.4 | 2.0 | 2.1 | 2.2 | 2.0 | 2.8 | 2.5 |
| Color before heat test | milky white | milky white | milky white | milky white | milky white | milky white | milky white | milky white | milky white |
| Color after heat test | yellowish brown | yellowish brown | yellowish brown | yellowish brown | yellowish brown | yellowish brown | yellowish brown | yellowish brown | yellowish brown |

The data in Table 1 demonstrate that when only the epoxy-containing organosilicon compound is used, the bond strength achieved under the curing conditions of 120°C and 10 minutes is insufficient (normally requiring heating at 120°C for 60 minutes). The addition of (meth)acryloxyalkyl-modified organopolysiloxane of linear or cyclic organopolysiloxane structure having a viscosity of 5-10,000 mPa-s at 25°C and an organotitanium compound improved the bond strength, but discoloration was noticed after the heat test.

**Table 2**

| Formulation (pbw) | Example | | | | | | | | | | |
|---|---|---|---|---|---|---|---|---|---|---|---|
| | 1 | 2 | 3 | 4 | 5 | 6 | 7 | 8 | 9 | 10 | 11 |
| A | 100 | 100 | 100 | 100 | 100 | 100 | 100 | 100 | 100 | 100 | 100 |
| B-1 | 3 | 3 | 3 | 3 | 3 | 3 | 3 | 3 | 3 | 3 | 3 |
| B-2 | 3 | 3 | 3 | 3 | 3 | 3 | 3 | 3 | 3 | 3 | 3 |
| C | 0.15 | 0.15 | 0.15 | 0.15 | 0.15 | 0.15 | 0.15 | 0.15 | 0.15 | 0.15 | 0.15 |
| D-1 | 1 | | | | | | | 1 | 1 | 0.5 | 2 |
| D-2 | | 1 | | | | | | | | | |
| D-3 | | | 1 | | | | | | | | |
| D-4 | | | | 1 | | | | | | | |
| D-5 | | | | | 1 | 1 | 1 | | | | |
| E-1 | 0.5 | 0.5 | 0.5 | 0.5 | 0.5 | | | 0.1 | 1.0 | 0.5 | 0.5 |
| E-2 | | | | | | 0.5 | | | | | |
| E-3 | | | | | | | 0.5 | | | | |
| F | 3 | 3 | 3 | 3 | 3 | 3 | 3 | 3 | 3 | 3 | 3 |
| G | 15 | 15 | 15 | 15 | 15 | 15 | 15 | 15 | 15 | 15 | 15 |
| H | 10 | 10 | 10 | 10 | 10 | 10 | 10 | 10 | 10 | 10 | 10 |
| I | 0.1 | 0.1 | 0.1 | 0.1 | 0.1 | 0.1 | 0.1 | 0.1 | 0.1 | 0.1 | 0.1 |
| J-1 | | | | | | | | | | | |
| J-2 | | | | | | | | | | | |

| Test results | | | | | | | | | | | |
|---|---|---|---|---|---|---|---|---|---|---|---|
| Shear bond strength 2.5 to glass (MPa) | 2.5 | 2.3 | 2.4 | 2.2 | 2.1 | 2.5 | 2.2 | 2.6 | 2.0 | 2.1 | 2.5 |
| Shear bond strength to steel (MPa) | 2.2 | 2.3 | 2.5 | 2.6 | 2.7 | 2.1 | 2.2 | 2.3 | 2.2 | 2.2 | 2.3 |
| Color before heat test | milky white | milky white | milky white | milky white | milky white | milky white | milky white | milky white | milky white | milky white | milky white |
| Color after heat test | milky white | milky white | milky white | milky white | milky white | milky white | milky white | milky white | milky white | milky white | milky white |

As seen from Table 2, the addition of (meth)acryloxyalkyl-modified organopolysiloxane of linear or cyclic organopolysiloxane structure having a viscosity of 5-10,000 mPa-s at 25°C and a zirconium compound allowed bond strength to develop fully even by brief heating and minimized discoloration after the heat test.

## Claims

1. An addition type silicone adhesive composition comprising in admixture,
(A) 100 parts by weight of organopolysiloxane having at least two silicon-bonded alkenyl groups per molecule,
(B) organohydrogenpolysiloxane having at least two silicon-bonded hydrogen atoms per molecule in an amount to give 0.1 to 5.0 moles of silicon-bonded hydrogen atoms per mole of alkenyl groups in the organopolysiloxane (A),
(C) a catalytic amount of hydrosilylation catalyst,
(D) 0.0001 to 10 parts by weight of (meth)acryloxyalkyl-modified organopolysiloxane possessing a linear or cyclic organopolysiloxane structure and having a viscosity of 5 to 10,000 mPa-s at 25°C, and
(E) zirconium compound.

2. The silicone adhesive composition of claim 1 wherein the zirconium compound (E) is present in an amount of 0.0001 to 5 parts by weight per 100 parts by weight of the organopolysiloxane (A).

3. The silicone adhesive composition of claim 1 or 2 which further comprises (F) tackifier in an amount of up to 10 parts by weight per 100 parts by weight of component (A).

4. The silicone adhesive composition of claim 3 wherein the tackifier is an organic silicon compound having at least two functional groups selected from the group consisting of alkoxysilyl group, silanol group, carbinol group, epoxy group, hydrosilyl group, alkenyl group, amino group, carbonyl group, and ester group in a molecule.

5. Use of a composition according to any one of claims 1 to 4 in the preparation of a product, including curing the composition.

6. Use according to claim 5 in which the cured composition adheres to another component of the product.

7. Use of a composition according to any one of claims 1 to 4 as an adhesive.

## Patentansprüche

1. Siliconkleberzusammensetzung des Additionstyps, umfassend in Beimischung:
(A) 100 Gewichtsteile Organopolysiloxan mit zumindest zwei Silicium-gebundenen Alkenylgruppen pro Molekül,
(B) Organohydrogenpolysiloxan mit zumindest zwei Silicium-gebundenen Wasserstoffatomen pro Molekül in einer Menge, so dass 0,1 bis 5,0 mol Silicium-gebundene Wasserstoffatome pro mol Alkenylgruppen in dem Organopolysiloxan (A) erhalten werden,
(C) eine katalytische Menge Hydrosilylierungskatalysator,
(D) 0,0001 bis 10 Gewichtsteile (Meth)acryloxyalkyl-modifiziertes Organopolysiloxan, das eine unverzweigte oder zyklische Organopolysiloxanstruktur und eine Viskosität von 5 bis 10.000 mPa·s bei 25 °C aufweist, sowie
(E) eine Zirconiumverbindung.

2. Siliconkleberzusammensetzung nach Anspruch 1, worin die Zirconiumverbindung (E) in einer Menge von 0,0001 bis 5 Gewichtsteilen pro 100 Gewichtsteile des Organopolysiloxans (A) vorhanden ist.

3. Siliconkleberzusammensetzung nach Anspruch 1 oder 2, die weiters einen Klebrigmacher (F) in einer Menge von bis zu 10 Gewichtsteilen pro 100 Gewichtsteile von Komponente (A) umfasst.

4. Siliconkleberzusammensetzung nach Anspruch 3, worin der Klebrigmacher eine organische Siliciumverbindung mit zumindest zwei funktionellen Gruppen in einem Molekül ist, die aus der aus Alkoxysilyl-, Silanol-, Carbinol-, Epoxy-, Hydrosilyl-, Alkenyl-, Amino-, Carbonyl- und Estergruppen bestehenden Gruppe ausgewählt sind.

5. Verwendung einer Zusammensetzung nach einem der Ansprüche 1 bis 4 zur Herstellung eines Produkts, umfassend das Härten der Zusammensetzung.

6. Verwendung nach Anspruch 5, wobei die gehärtete Zusammensetzung an einer anderen Komponente des Produkts haftet.

7. Verwendung einer Zusammensetzung nach einem der Ansprüche 1 bis 4 als Kleber.

## Revendications

1. Composition adhésive de silicone réticulable par addition, comprenant en mélange,
(A) 100 parties en poids d'un organopolysiloxane ayant au moins deux groupes alcényle liés à un silicium par molécule,
(B) un organohydrogénopolysiloxane ayant au moins deux atomes d'hydrogène liés à un silicium par molécule en une quantité pour donner 0,1 à 5,0 moles d'atomes d'hydrogène liés à un silicium par mole de groupes alcényle dans l'organopolysiloxane (A),
(C) une quantité catalytique d'un catalyseur d'hydrosilylation,
(D) 0,0001 à 10 parties en poids d'un organopolysiloxane modifié (méth)acryloxyalkyle, possédant une structure organopolysiloxane linéaire ou cyclique et ayant une viscosité de 5 à 10 000 mPa.s à 25°C, et
(E) un composé du zirconium.

2. Composition adhésive de silicone de la revendication 1, dans laquelle le composé du zirconium (E) est présent en une quantité allant de 0,0001 à 5 parties en poids par 100 parties en poids de l'organopolysiloxane (A).

3. Composition adhésive de silicone de la revendication 1 ou 2, qui comprend en outre, (F) un agent collant en une quantité de jusqu'à 10 parties en poids par 100 parties en poids du composant (A).

4. Composition adhésive de silicone de la revendication 3, dans laquelle l'agent collant est un composé organique silicone, ayant au moins deux groupes fonctionnels choisis parmi le groupe consistant en un groupe alcoxysilyle, un groupe silanol, un groupe carbinol, un groupe époxy, un groupe hydrosilyle, un groupe alcényle, un groupe amino, un groupe carbonyle, un groupe ester dans une molécule.

5. Utilisation d'une composition selon l'une quelconque des revendications 1 à 4, dans la préparation d'un produit, comprenant le durcissement de la composition.

6. Utilisation selon la revendication 5, dans laquelle la composition durcie adhère à un autre composant du produit.

7. Utilisation d'une composition selon l'une quelconque des revendications 1 à 4, comme adhésif.
